Europäisches Patentamt

European Patent Office

Office européen des brevets

(19)

(11) Publication number: **0 249 494 B1**

# EUROPEAN PATENT SPECIFICATION

(45) Date of publication of patent specification: **02.05.91**   (51) Int. Cl.⁵: **G06F 3/16**, G06F 15/20

(21) Application number: **87305231.0**

(22) Date of filing: **12.06.87**

(54) **Word processing system with means to record and play back messages from an operator relating to the text.**

(30) Priority: **13.06.86 US 873755**

(43) Date of publication of application:
**16.12.87 Bulletin 87/51**

(45) Publication of the grant of the patent:
**02.05.91 Bulletin 91/18**

(84) Designated Contracting States:
**DE FR GB IT**

(56) References cited:
**EP-A- 0 081 958**
**GB-A- 2 088 106**
**GB-A- 2 089 543**

**IBM TECHNICAL DISCLOSURE BULLETIN, vol. 16, no. 2, July 1973, pages 500-503, New York, US; P.D. WELCH: "System for integrating and collating audio and text, and for text creation and editing"**

**IBM TECHNICAL DISCLOSURE BULLETIN, vol. 28, no. 11, April 1986, page 4807, New York, US; "Audio annotation mark"**

(73) Proprietor: **International Business Machines Corporation**
**Old Orchard Road**
**Armonk, N.Y. 10504(US)**

(72) Inventor: **Mersiovsky, Lynda Kaye**
**2313 Spring Wagaon Lane**
**Austin Texas 78728(US)**
Inventor: **Sprott, Charles Norman**
**8605 Silver Ridge Drive**
**Austin Texas 78759(US)**
Inventor: **Oelrich, Jonathan William**
**1100 Cripple Creek Drive**
**Austin Texas 78758(US)**
Inventor: **Rogers, Sr., Cecil William**
**4115 Granada Drive**
**Georgetown Texas 78628(US)**

(74) Representative: **Atchley, Martin John Waldegrave et al**
**IBM United Kingdom Limited Intellectual Property Department Hursley Park**
**Winchester Hampshire SO21 2JN(GB)**

## Description

The present invention relates to a word processing system of the type which includes an audio recording device for recording messages from an operator relating to the text being processed and an audio playback device for playing back these messages.

In word processing systems, such as those controlled by the IBM (Registered Trade Mark) DisplayWrite 3 program, it is desirable to provide some means for a system user or operator to insert instructions or messages relative to text being processed by the system. US-A-4,582,441 discloses an arrangement for providing voice prompting to a keyboard operator indicating particular information to be entered by the operator. This arrangement employs a voice synthesiser which can synthesise predetermined words in accordance with digital encoding techniques, and these synthesised words can be played back at the desired time to prompt the keyboard or display operator. Further, US-A-4,215,422 discloses an example of phrase storage capabilities in a typewriter.

One particularly useful technique in a word processing system allows the use of audio input from the user to issue instructions, usually in relation to text being displayed on a display device in the system. In such a system, it is desirable that the operator should have the ability to record an audio message in the system and that this recorded audio message may be played back in audio output form by the operator or another person.

One problem which can occur in such an audio system is that if the operator is speaking too softly into the microphone while recording, the speech may not be picked up properly by the microphone. This will result in the message being lost in the recording. On the other hand, if the operator is speaking too loudly, the message may not come out clearly in the recording because of overloading one or more elements of the audio system. In either case, the message will not be of useful quality, and if this occurs, the operator must re-record the entire message again until the operator can adjust his voice to the right volume level.

Another problem encountered in such a system is that if the operator is interrupted while recording a message, such as by a telephone call or the like, the operator must stop and leave the recording only partially finished. Thus, the operator must again select the record function once more and completely re-record the message. The same problem occurs while listening to a previously recorded message: if the operator wishes to jot down a note or the like, he will probably miss part of the message while he is writing. Under these circumstances, the operator must again go through the process of selecting the listen function, and listen to the entire recording again.

GB-A-2 088 106 describes a word processing system including the feature of audio recording means for recording messages relating to the text being processed. However, the system in this Specification does not include means for monitoring the volume level of the speech supplied to the recording means.

EP-A-81 958 suggests, but does not describe in detail, the idea of monitoring the level of recording and play back in a tape recorder. There is no suggestion that this idea should be applied to a word processing system.

Neither of these Specifications describes nor suggests the idea of displaying on the display device of a word processing system a message indicating whether the recording or play back level is too high or too low.

The object of the present invention is to provide a word processing system having an improved audio recording device for recording messages from an operator relating to the text being processed.

The present invention relates to a word processing system of the type which comprises a processor for storing programs controlling the operation of said word processing system,
a display device for displaying text being processed,
audio recording means for recording messages spoken by an operator and relating to text being processed, and
monitoring means for monitoring the volume level of speech supplied to said recording means by an operator.

According to the invention the monitoring means comprises means for displaying a message on the display device adjacent to the displayed text so as to indicate to the operator if the volume level is too high or too low.

The invention also relates to a word processing system of the above type characterised in that it comprises audio playback means for playing back the recorded messages, monitoring means for monitoring the volume level of a message being played back, and means for displaying a message on said display device to indicate to the operator if the volume level is too high or too low and how to compensate for the too high or too low volume level.

The volume indicating function may be implemented by checking the status of an audio driver unit in the audio recording means after listening for noise. If the driver indicates that the volume of the operator speech is too high or too low, the operator is informed of this through a message on a display device in the system and instructed to change the volume of his speech.

While the operator is playing a message back, he may be able to control the output volume by using the cursor "up" key on a keyboard in the system to raise the volume and the cursor "down" key on the keyboard to lower the volume. The indication displayed while the operator is playing the message may inform him that he is able to do this. The system operating code requests the operator's input for the cursor "up" or "down" key to be actuated while playback is in progress, and if it is, the volume change request is passed to the audio driver.

The interrupt feature of the invention gives the operator the ability to pause for an indefinite period of time while recording an audio message, simply by actuating the keyboard space bar for example. This allows time to regroup his thoughts, to be interrupted by a telephone call, etc., without having to stop recording the audio message and start over again when he decides to continue it. When the operator is ready to continue the recording, he simply actuates the space bar again and continues talking. The partial messages will be combined into one complete message. The operator may pause as many times as he desires during one recording session.

The operator may also pause during playback of an audio message. The space bar may be used as many times as desired to stop the playing of the message until the space bar is actuated again, at which time the playing of the message will resume exactly where it left off before it was stopped by actuation of the space bar.

This function may be implemented by displaying a menu instructing the operator to actuate the space bar to pause immediately after the record/playback begins. When the operator actuates the space bar, the audio access control program issues a STOP command to the audio driver. When the space bar is actuated again, the audio access control program issues a START command to the audio driver and the function is resumed.

In order that the invention may be more readily understood an embodiment will now be described with reference to the accompanying drawings, in which:

Figs. 1 and 2 are flow charts illustrating the operation of the volume monitoring feature of a word processing system as illustrated in Fig. 4 during recording and playback, respectively,

Fig. 3 is a flow chart showing the operation of the pause/resume feature of the word processing system, and

Fig. 4 is a block diagram of a word processing system in which the present invention can be implemented.

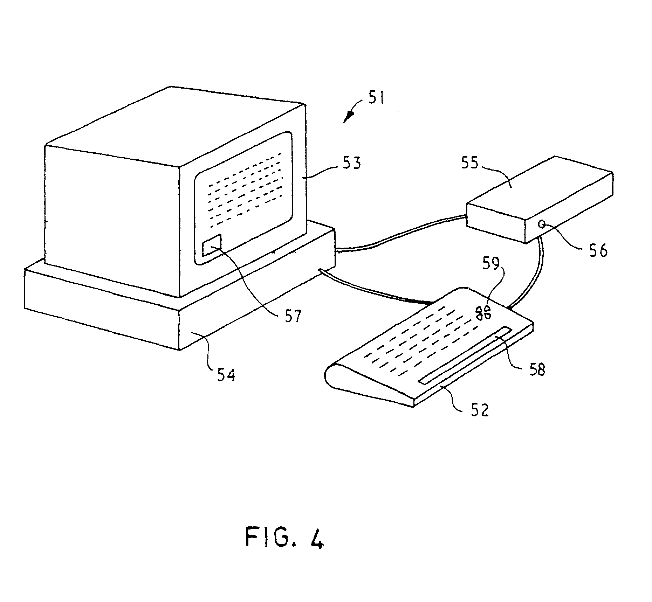

The present invention is particularly adapted for use with a word processing system of the type illustrated in Figure 4. Such a system may be controlled by the IBM (Registered Trade Mark) DisplayWrite 3 word processing program. The system includes a personal computer 51, for example an IBM PC-AT or PC-XT computer, including a keyboard 52 and a display device 53, and operating software (program) for the system stored in a processor 54. The keyboard 52 includes a space bar 58 and cursor keys 59 for controlling the position of the cursor on the display 53. Text to be processed can be entered by an operator using the keyboard 52 and can be stored in the processor 54. Additionally, to carry out the present invention, the system requires a Voice Communications Adaptor 55 which includes a loudspeaker/microphone 56 and a Voice Communications Operating Subsystem program. This is an application program interface program which is loaded and made resident in the system before the word processing program is executed.

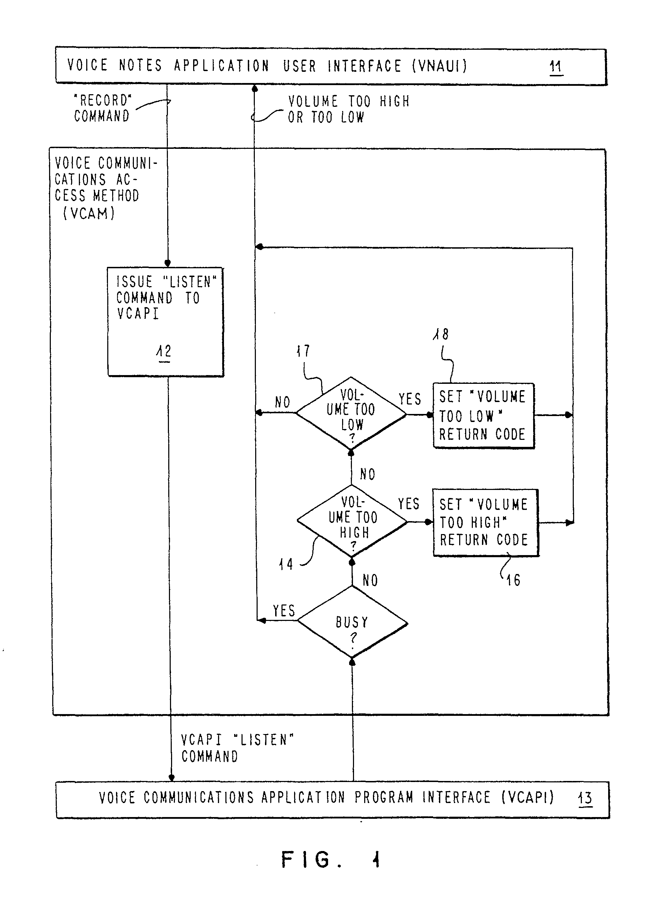

The flow chart of Fig. 1 illustrates the operation of the word processing system of Fig. 4 to monitor the voice level of the operator during recording of an audio message for use in the system using the microphone 56. An audio message is identified as a voice note by the word processing program. Recording is initiated through a Voice Notes Application User Interface 11 (VNAUI) in the processor 54 which processes a "record" command generated by the system operator. By means of a portion of the word processing program identified as Voice Communications Access Method (VCAM), the record command, represented by 12, is converted to a "listen" command which is passed to the Voice Communications Application Program Interface 13 (VCAPI) in the processor 54. This causes the system to continuously monitor the signal level in the audio driver of the recording circuitry. A portion of this monitoring operation is represented by an element 14 showing the monitoring for excessively high recording volume level. If the recording level is too high, a code indicating "volume too high" is returned to the VNAUI 11 through an element 16. This code causes the appearance on the display screen 53 of a message 57 indicating to the operator that he is speaking too loudly and that he should reduce his voice level. This message remains on the display as long as the voice recording level is too high, but will disappear from the screen when the voice recording level returns to an acceptable value.

Block 17 represents the monitoring of the audio driver to detect a voice recording level which is too low. If the voice recording level is too low, block 18 causes the generation and transmission to the VNAUI of a code indicating "volume too low". This results in the appearance on the display screen of a message 57 advising the operator that the voice recording level is too low, and this message will remain on the screen as long as the voice recording level is too low.

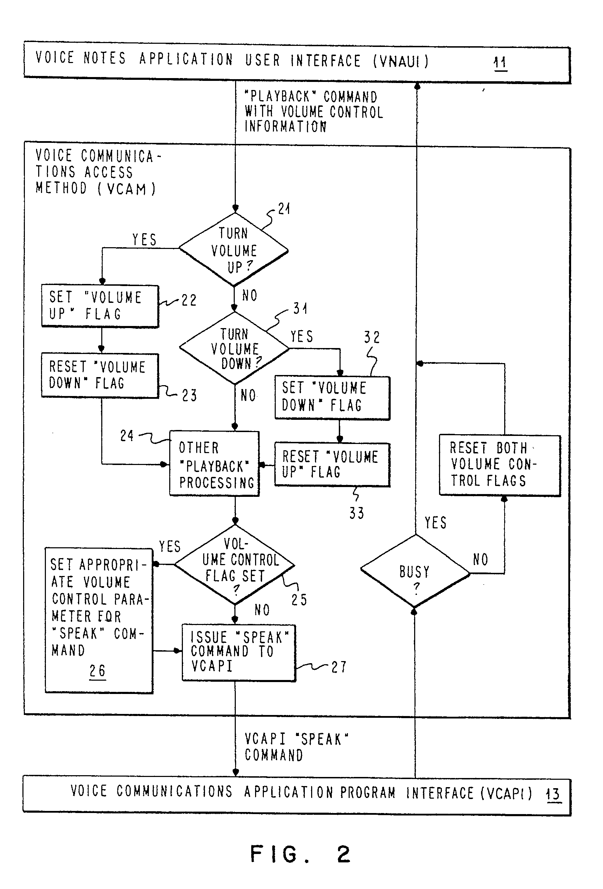

The flow chart of Fig. 2 illustrates the operation of the word processing system of Fig. 4 when in the playback mode to play back through the loudspeaker 56 an audio message previously recorded by the operator during which the volume of recording may have been either too high or too low, as discussed above in connection with Fig. 1. The "playback" command is issued from VNAUI 11. During playback of the previously recorded messages, in those passages where the recorded volume is either too low or too high, the VNAUI 11 causes an instruction to appear on the screen of the display device, preferably in the form of a message 57 in the menu area, instructing the operator to either turn up or turn down the playback volume. In one particularly attractive form of the invention, the instruction to the operator allows them to raise or lower, respectively, the volume of the recording being played back by pressing the cursor keys 59 on the keyboard 52.

If the operator requests during the playback operation that the volume should be turned up because the message was recorded at a too low volume, element 21 causes a "volume up" flag in element 22 to be raised which in turn resets the "volume down" flag through element 23. After other playback processing in block 24, the volume control flag set condition is examined in element 25, and if the flag is set, element 26 sets the appropriate volume control parameter for the "speak" command to be issued by VCAPI 13. Block 27 causes the issuance of the "speak" command to VCAPI 13, which in turn causes the previously recorded audio material to be played back through a loud speaker in the word processing system.

A similar mode of operation occurs when the volume should be turned down because the message was recorded at too high a volume, as detected by block 31 in Fig. 2. This causes the setting of a "volume down" flag, as shown by element 32, which, after resetting the "volume up" flag in element 33 and the other playback processing in element 24, is supplied to check the set condition of the volume control flag in element 25. This information is passed through element 26 to element 27 to cause the issuance of the "speak" command to VCAPI 13. As with a low volume condition described above, the "speak" command will cause the VCAPI 13 to play back the recorded message with an indication 57 on the display screen to the operator that the volume in the recorded message should be decreased. Again, this message may be in the form of a menu instruction advising the operator to actuate the display cursor key 59 on the keyboard 52 to reduce the volume of the message being played back.

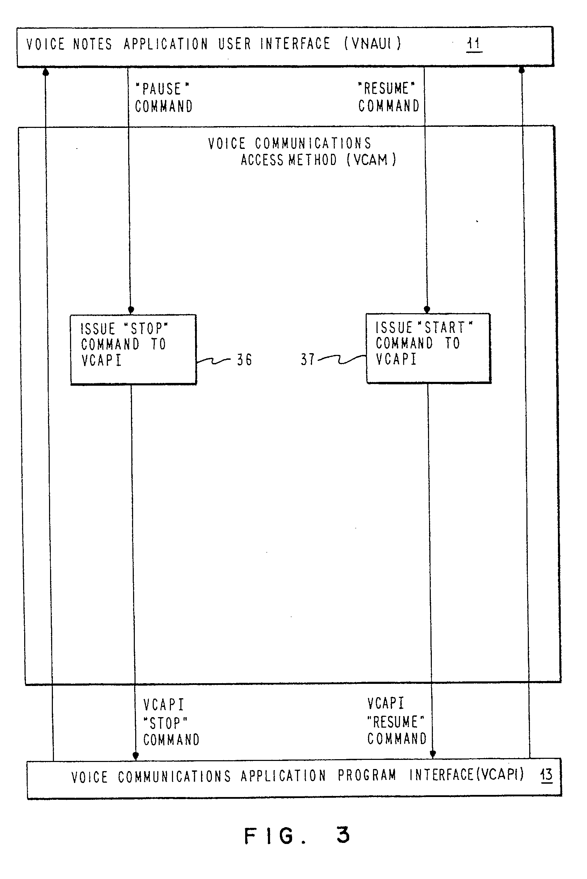

Fig. 3 illustrates the operation of the word processing system of Fig. 4 to permit pausing during recording followed by the resumption of that recording or pausing during playback followed by the resumption of that playback. To pause during recording or playback, the operator makes a suitable input, such as actuating the space bar 58 on the keyboard 52. This information is converted by VNAUI 11 to a "pause" command which is transmitted through the Voice Communications Access Method (VCAM) to result in the issuance of a "stop" command to VCAPI 13, represented by element 36 in Fig. 3. This "stop" command to VCAPI 13 results in stopping of the recording or playback process.

When the operator wishes to resume the recording or playback process, he again actuates the space bar 58 on the keyboard to generate a "resume" command. This is converted in the Voice Communications Access Method (VCAM) to cause the generation of the "start" command in element 37 to VCAPI 13, resulting in the resumption of either recording or playback as relevant. Thus, this feature of the word processing system permits pausing during either recording or playback of audio messages, without requiring that the entire message be either re-recorded or played back again to maintain continuity, as would otherwise be required without this feature.

## Claims

1. A word processing system of the type which comprises
   a processor (54) for storing programs controlling the operation of said word processing system,
   a display device (53) for displaying text being processed,
   audio recording means (55, 56) for recording messages spoken by an operator and relating to text being processed, and
   monitoring means for monitoring the volume level of speech supplied to said recording means by an operator,
   characterised in that
   said monitoring means comprises
   means for displaying a message (57) on said display device adjacent to the displayed text so as to indicate to said operator if said volume level is too high or too low.

2. A word processing system as claimed in claim 1 characterised in that said recording means comprises interrupt means controlled by said operator for temporarily interrupting a recording operation.

3. A word processing system as claimed in claim 2 comprising a keyboard (52) for entering text to be processed and characterised in that said keyboard comprises said interrupt control means (58).

4. A word processing system as claimed in any one of the preceding claims characterised in that it comprises
audio playback means (55, 56) for playing back said recorded messages,
monitoring means for monitoring the volume level of a message being played back, and
means for displaying a message (57) on said display device to indicate to said operator if said volume level is too high or too low and how to compensate for said too high or too low volume level.

5. A word processing system as claimed in claim 4 comprising a keyboard (52) for entering text to be processed and characterised in that said keyboard comprises volume control means (59) for controlling the compensation for said too high or too low volume level, and said message (57) indicates to said operator how to operate said control means.

6. A word processing system as claimed in claim 4 or claim 5 characterised in that said playback means comprises interrupt control means controlled by said operator for temporarily interrupting a playback operation.

7. A word processing system as claimed in claim 6 comprising a keyboard (52) for entering text to be processed and characterised in that said keyboard comprises said interrupt control means (58).

**Revendications**

1. Système de traitement de texte du type comprenant
un processeur (54) servant à mémoriser des programmes commandant le fonctionnement dudit système de traitement de texte,
un dispositif d'affichage (53) servant à afficher un texte en cours de traitement,
des moyens d'enregistrement audio (55,56) servant à enregistrer des messages lus par un opérateur et concernant le texte traité, et
des moyens de contrôle servant à contrôler le niveau de volume de la parole envoyée auxdits moyens d'enregistrement par un opérateur, caractérisé en ce que
lesdits moyens de contrôle comprennent
des moyens pour afficher un message (57) sur ledit dispositif d'affichage, à côté du texte affiché, pour indiquer audit opérateur si ledit niveau de volume est trop élevé ou trop bas.

2. Système de traitement de texte selon la revendication 1, caractérisé en ce que lesdits moyens d'enregistrement comprennent des moyens d'interruption commandés par ledit opérateur pour interrompre temporairement une opération d'enregistrement.

3. Système de traitement de texte selon la revendication 2, comprenant un clavier (52) pour introduire un texte devant être traité, et caractérisé en ce que ledit clavier comprend lesdits moyens de commande d'interruption (58).

4. Système de traitement de texte selon l'une quelconque des revendications précédentes, caractérisé en ce qu'il comprend
des moyens de lecture audio (55,56) servant à lire lesdits messages enregistrés,
des moyens de contrôle servant à contrôler le niveau de volume d'un message lu, et
des moyens pour afficher un message (57) sur ledit dispositif d'affichage pour indiquer audit opérateur si ledit niveau de volume est trop élevé ou trop bas et comment compenser ledit niveau de volume trop élevé ou trop bas.

5. Système de traitement de texte selon la revendication 4, comprenant un clavier (52) servant à introduire un texte devant être traité, et caractérisé en ce que
ledit clavier comporte des moyens (59) de commande du volume servant à commander la compensation dudit niveau de volume trop élevé ou trop bas, et
ledit message (57) indique audit opérateur comment faire fonctionner lesdits moyens de commande.

6. Système de traitement de texte selon la revendication 4 ou 5, caractérisé en ce que lesdits de lecture comprennent des moyens de commande d'interruption commandés par ledit opérateur pour interrompre temporairement l'opération de lecture.

7. Système de traitement de texte selon la revendication 6, comprenant un clavier (52) servant à introduire le texte devant être traité et caractérisé en ce que ledit clavier comporte lesdits moyens de commande d'interruption (58).

**Ansprüche**

1. Textverarbeitungssystem der Art, die aufweist:
einen Prozessor (54) zum Speichern von Programmen, welche das Arbeiten des Textverarbeitungssystems steuern,
ein Anzeigegerät (53) zum Anzeigen eines in Verarbeitung befindlichen Textes,
ein Tonaufzeichnungsmittel (55, 56) zum Aufzeichnen von Nachrichten, die von einem Bediener gesprochen werden und sich auf einen in Verarbeitung befindlichen Text beziehen,
ein Überwachungsmittel zum Überwachen des Lautstärkepegels von Sprache, welche dem Aufzeichnungsmittel von einem Bediener geliefert wird,
dadurch gekennzeichnet, daß
das Überwachungsmittel aufweist:
Mittel zum Anzeigen einer Nachricht (57) auf dem Anzeigegerät, die benachbart zu dem angezeigten Text liegt, um dem Bediener anzuzeigen, wenn der Lautstärkepegel zu hoch oder zu niedrig ist.

2. Textverarbeitungssystem nach Anspruch 1, dadurch gekennzeichnet, daß das Aufzeichnungsmittel Unterbrechungsmittel aufweist, die von dem Bediener gesteuert werden, um einen Aufzeichnungsvorgang zeitweilig zu unterbrechen.

3. Textverarbeitungssystem nach Anspruch 2, das eine Tastatur (52) zum Eingeben eines zu verarbeitenden Textes aufweist und dadurch gekennzeichnet ist, daß die Tastatur die Unterbrechungs-Steuerungsmittel (58) aufweist.

4. Textverarbeitungssystem nach irgend einem der vorgehenden Ansprüche, dadurch gekennzeichnet, daß es aufweist:
ein Tonwiedergabemittel (55, 56) zum Wiedergeben der aufgezeichneten Nachrichten,
Überwachungsmittel zum Überwachen des Lautstärkepegels einer in Wiedergabe befindlichen Nachricht und
Mittel zum Wiedergeben einer Nachricht (57) auf dem Anzeigegerat, um dem Bediener anzuzeigen, wenn der Lautstärkepegel zu hoch oder zu niedrig ist und wie der zu hohe oder zu niedrige Lautstärkepegel ausgeglichen werden soll.

5. Textverarbeitungssystem nach Anspruch 4, mit einer Tastatur (52) zum Eingeben eines zu verarbeitenden Textes und dadurch gekennzeichnet, daß
die Tastatur Lautstärke-Steuermittel (59) zum Steuern des Ausgleiches für den zu hohen oder zu niedrigen Lautstärkepegel aufweist und
die Nachricht (57) dem Bediener anzeigt, wie die Steuermittel betrieben werden sollen.

6. Textverarbeitungssystem nach Anspruch 4 oder 5, dadurch gekennzeichnet, daß das Wiedergabemittel Unterbrechungs-Steuerungsmittel aufweist, die von dem Bediener für ein zeitweiliges Unterbrechen eines Wiedergabevorganges gesteuert werden.

7. Textverarbeitungssystem nach Anspruch 6 mit einer Tastatur (52) zum Eingeben eines zu verarbeitenden Textes und dadurch gekennzeichnet, daß die Tastatur die Unterbrechungs-Steuermittel (58) aufweist.

F I G . 1

VOICE NOTES APPLICATION USER INTERFACE (VNAUI)                    11

"PLAYBACK" COMMAND
WITH VOLUME CONTROL
INFORMATION

VOICE COMMUNICA-
TIONS ACCESS
METHOD (VCAM)

21
TURN
VOLUME
UP ?

YES

SET "VOLUME
UP" FLAG          22

RESET "VOLUME
DOWN" FLAG        23

NO

31
TURN
VOLUME
DOWN ?

YES

SET "VOLUME
DOWN" FLAG        32

NO

24
OTHER
"PLAYBACK"
PROCESSING

RESET "VOLUME
UP" FLAG          33

RESET BOTH
VOLUME CON-
TROL FLAGS

YES

SET APPROPRI-
ATE VOLUME
CONTROL PARA-
METER FOR
"SPEAK" COM-
MAND
26

YES

VOL-
UME CONTROL
FLAG SET
?               25

NO

BUSY
?

NO

ISSUE "SPEAK"
COMMAND TO
VCAPI           27

VCAPI "SPEAK"
COMMAND

VOICE COMMUNICATIONS APPLICATION PROGRAM INTERFACE (VCAPI) 13

FIG. 2

8

VOICE NOTES APPLICATION USER INTERFACE (VNAUI)     11

"PAUSE"              "RESUME"
COMMAND             COMMAND

VOICE COMMUNICATIONS
ACCESS METHOD (VCAM)

ISSUE "STOP"                    ISSUE "START"
COMMAND TO                      COMMAND TO
VCAPI          36        37     VCAPI

VCAPI               VCAPI
"STOP"              "RESUME"
COMMAND             COMMAND

VOICE COMMUNICATIONS APPLICATION PROGRAM INTERFACE (VCAPI)   13

F I G .   3

FIG. 4